# EUROPEAN PATENT APPLICATION

(11) **EP 3 560 327 A1**
(43) Date of publication of application: **30.10.2019**
(21) Application number: 17885068.1
(22) Date of filing: 19.12.2017
(51) Int. Cl.: A01G 31/00, A01G 9/00

(54) **IRRIGATION METHOD AND SYSTEM FOR HYDROPONIC CROPS**

(30) Priority: 20.12.2016 ES 201631629
(71) Applicant: Horticultura Hidropónica S.L., 36350 Nigrán (Pontevedra) (ES)
(72) Inventor: PEREIRA ESTEVA, Rafael, 36350 Nigrán (Pontevedra) (ES)
(74) Representative: Monzón de la Flor, Luis Miguel
(86) International application number: PCT/ES2017/070829
(87) International publication number: WO 2018/115557

(57) **Abstract**

The invention relates to an irrigation system for hydroponic crops, of the type used in growing tanks (1) containing a nutrient solution, and which is formed by a grid (2) partially submerged in the nutrient solution of the growing tank (1), the grid (2) being formed by straight channels (3) separated from each other by adjacent cells (4) in which the plants to be grown are arranged, said cells being connected to the channels (3) and/or to each other, the channels (3) having a cross section in the shape of an inverted U. The system comprises at least one irrigation emitter (5) disposed in a channel (3) of the grid, the emitter (5) being configured to emit a volume of nutrient solution into the nutrient solution contained in the tank (1) or onto the surface (10) of same. The invention also relates to an irrigation method.

## Description

### OBJECT OF THE INVENTION

The present invention relates to a system and a method for the irrigation of hydroponic crops, i.e. for growing plants in the absence of soil using aqueous mineral solutions.

The object of the invention is to optimize and reduce electricity consumption, reduce the volume of aqueous solution contained in the growing tanks, achieve greater homogeneity in the crops, and greater accuracy in the irrigation systems applied to the hydroponic crops with floating and/or suspended systems in growing tanks containing an aqueous solution, likewise it is intended to improve plant health, oxygenation and development of said crops.

The invention is included in the field of agriculture, more specifically that relating to hydroponic crops systems.

### STATE OF THE ART

Hydroponics or hydroponic agriculture is a method used to grow plants using mineral solutions instead of agricultural soil. The roots receive a balanced nutrient solution dissolved in water with all the chemical elements necessary for plant development, which may grow solely in a mineral solution or in an inert medium, such as washed sand, gravel or perlite, among many others.

The hydroponic crop systems developed in cultivation ponds or tanks whereon the plants to grow float or are suspended are widely known. On an industrial level, almost all these systems work with large similarities in terms of infrastructures, and in their operation.

The hydroponic systems developed in cultivation ponds are known by various names: DWC (Deep Water Culture), floating culture, raft culture, raft system, deep root culture, culture without soil, culture on water, etc. In all these cases, whatever their scale, but especially on an industrial level, these systems have in their installations at least one growing tank, an irrigation head largely composed of at least one pump, which may be complemented with filters and a controller to program irrigation, in charge of measuring, correcting and regulating the adaptation of the aqueous solution called nutrient solution, in addition to regulating the irrigation times.

The nutrients are added during this operation, the solution is filtered, in some cases it is disinfected and it is again pumped to the growing tank.

The growing tanks, which may be situated in a greenhouse, in the outdoors or in a place without natural light, equipped with artificial light, are the places where the crop is grown. The growing tanks are generally rectangular shape; they may by themselves contain the nutrient solution, or in other cases may have a waterproof plastic sheet to contain the nutrient solution. Different apparatus which float or keep the roots suspended, partially submerged or completely submerged are disposed on the nutrient solution. The aerial part of the plant remains in the upper part of the securing element, separated by it from the nutrient solution.

In the hydroponic installations described, the temperature control of the nutrient solution and maintenance of an optimum dissolved oxygen level in the nutrient solution usually presents problems. Aerators are required to maintain a minimum level of dissolved oxygen, which leads to greater electricity consumption and an increase in investment. Likewise, due to the little movement of the nutrient solution contained in the growing tank, algae are developed, which are competitors of the plants grown, both in nutrient consumption and in consumption of the gases O₂ and CO₂.

Multiple patents have been developed in this field of the invention with the aim of resolving oxygenation problems in the nutrient solution, improving plant health and thus reducing operating costs.

An example of this type of irrigation installations is that detailed in patent ES2507341 B1, wherein the emission of the water or nutrient solution is performed from a side or end of the growing tanks by means of orifices in a pipe. This irrigation method can be largely improved by the invention disclosed below, since in its case it produces oxygenation by impact in the nutrient solution, exponential increase in oxygen-rich water which circulates through the roots of all plants, said effect leads to greater homogeneity in the crop, reduction on tank volume, improving electricity consumption.

Document US4976064 proposes improving oxygenation by piping the nutrient solution to the growing tank, and emission thereof by perforations in said pipe or through nozzles, with the aim of supplying miniscule drops or jets of water directly on the roots of the plants which are suspended and partially submerged in the nutrient solution.

These systems have demonstrated that they are inefficient in large areas; they require a high amount of energy, and intensive maintenance for their correct operation due to the dimension of the drops emitted and the blocking of the nozzles by the saline solution they emit. Likewise, the scope of the nozzles is limited, as it is the working pressure, because it directly hits the roots; in addition, the number of plants that can be irrigated is very limited unless a large number of nozzles or orifices are installed and maintained.

Document US5435098 discloses an irrigation method of the crops in question, where a current longitudinal to the longest axis of the growing tank is generated, the ultimate aim of which is to move crop trays.

The irrigation systems described applied to floating crops can be largely improved through the invention detailed below, contributing to a better development of the crops, allowing, in first place, the reduction in the volumes of nutrient solution contained in the growing tanks, optimizing the irrigation and oxygenation processes of the nutrient solution, which leads to greater ease of handling the crop, reduction in electricity consumption and reduction in implantation costs.

The present invention improves the irrigation systems for hydroponic crops on water, exponentially increases the volume of nutrient solution that circulates through the roots of the plants oxygenation by impact, likewise, it increases the availability of nutrients, oxygen and CO₂ and, therefore, enhancing crop development and improving the results thereof. Furthermore, the present invention allows reducing the volume of the growing tanks and reducing electricity consumption. Likewise, the irrigation system disclosed in the invention detailed below prevents the appearance of algae and thus diseases associated with low levels of oxygen and other gases in the nutrient solution.

### DESCRIPTION OF THE INVENTION

The irrigation system for hydroponic crops of the present invention is configured to generate currents in the nutrient solution contained in the growing tank, producing oxygenation by impact, and its movement and thus favouring the circulation of the solution through the roots of the plants and increasing the volume of nutrient solution accessible for the plants, improving the plant health, the homogeneity of the crop and increasing the supply of nutrients, oxygen and CO₂.

With this purpose, the irrigation system of the present invention for hydroponic crops, which is performed in a growing tank containing the nutrient solution or hydroponic solution for the plant growth, comprises:
- a grid partially submerged in the nutrient solution of the growing tank, said grid being formed by straight channels separated from each other by adjacent cells which are connected to said channels and/or to each other. The cells are designed to receive therein one or more plants.
- at least one irrigation emitter disposed in a channel of the grid, said emitter being configured to emit water or nutrient solution into the nutrient solution contained in the tank or on the surface thereof.

The straight channels are preferably situated parallel to one of the sides of the growing tank; more preferably, parallel to the shortest side of the tank, if it is rectangular.

The term "partially submerged" refers to the fact that at least one part of the grid is submerged in the nutrient solution of the tank and another part of the grid emerges from the nutrient solution of the tank. The submerged part of the grid may reach the bottom of the growing tank.

Preferably, the system includes an irrigation head comprising at least one pump or pumping system, said head being connected by one part to the growing tank through drainage pipes or to a nutrient solution or water storage tank and, by another part, to the irrigation emitters.

The channels have a profile or cross-section in the shape of an inverted U, i.e. they have two lateral walls and an upper wall disposed on the side walls; the lower face of the channels is completely open.

The irrigation emitters may emit the corresponding stream being immersed in the nutrient solution contained in the growing tank or be located at a certain distance therefrom; said emitters are connected to the irrigation head wherethrough they receive the water or nutrient solution to emit from a storage tank, well or from the growing tank.

The irrigation emitters are configured to emit a volume of water or nutrient solution with an angle of incidence which varies between 0° and 80°, with 0° being parallel to the surface of the nutrient solution contained in the tank. If the angle is 0°, the irrigation emitters must be immersed in the nutrient solution contained in the tank, and may also work in this way in any of the described angles.

Likewise, the emitters are configured to emit a determined volume of water or nutrient solution, at a determined pressure. Preferably, the working pressure could be situated between 0.15 Kg/cm2 (0.15 Kg/cm2 = 0.147 Bar = 14709.98 Pascals) and 6 Kg/ cm2 (6 Kg/cm2 = 5.83399 Bar = 588399 Pascals) of dynamic pressure in the emitter, emitting a volume between 15 litres/hour and 600 litres/hour. Both the pressure and the volume are controlled with an irrigation head pump.

The channels with cross-section in inverted U-shape are formed by:
- sides or lateral walls perpendicular to the surface of the nutrient solution of the growing tank wherein they are partially submerged, or at least they contain a longitudinal plane perpendicular to said surface, said lateral walls being equipped with one or more openings wherethrough they are connected to the adjacent cells, and by
- an upper central element parallel to the surface of the nutrient solution of the tank so that it blocks the entrance of light to the nutrient solution contained in the tank; likewise, said element gives support to the irrigation emitters when they are situated in said channel.

The lateral walls together with the upper central element form the channel in question the cross-section of which has the shape of an inverted U.

The channels are partially submerged so that a space is created between the surface of the nutrient solution contained in the tank and the upper part or element of the channels, in this way allowing the circulation of air contained between the lateral walls and the upper element and the surface of the nutrient solution contained in the tank.

For its part, the cells are formed by sides or lateral walls joined together forming the structure and perimeter thereof. These lateral walls or sides have, likewise, one or more openings wherethrough the cells are connected to the channels and/or to each other. The cells may have different geometries, even be circular or oval, in which the case the sides would be curved. The lateral walls of the cells are also partially submerged in the nutrient solution contained in the tank, thus forming a grid with one part situated on the surface of the liquid contained in the growing tank (emerging part) and with another part submerged therein (submerged part).

The cross-section of the lateral walls both of the cells and of the channels may be rectangular or trapezoidal, but they will include a longitudinal plane perpendicular to the surface of the nutrient solution contained in the tank.

The lateral walls of the cells which form its structure delimit a space designed to grow one or more plants. Said plants may be placed on a detachable or fixed support where there will be one or more orifices where the plants will be placed or any container to hold them, the root system thereof being totally or partially submerged in the nutrient solution of the tank, whilst the aerial part of the plants will be above the support.

The grid may be secured to the bottom of the tank, by straps or other securing means or even form part of the growing tank.

The grid may also be supported by securing elements to the tank walls or could be floating instead of secured to the tank. In this case, the structures that form the grid may be floating and/or may have floating bodies in the spaces between cells and channels to control the floatability of the grid.

To perform the irrigation method by means of this system, the emitters emit one or several jets of water or nutrient solution with a given angle of incidence and at a determined pressure in the nutrient solution contained in the growing tank. Said emission generates oxygenation by impact in the nutrient solution contained in the growing tank, in addition it places said solution in movement, generating currents that pass through the roots of the plants, multiplying in this way the volume of nutrient solution available for each plant. Said currents join with the currents generated by the closest irrigation emitters and so on and so forth successively generating a sum of currents that covers the entire surface of the growing tank.

The irrigation emitters receive the water or nutrient solution from a storage tank, a well or from the growing tank. If the emitters receive nutrient solution, this is recirculated from the growing tank.

The emission of a given volume, at a given pressure and with a determined degree of incidence generates a first current along the channel or channels the irrigation emitters have.

During the first part of the path of said first current and due to the movement of the fluid (nutrient solution), there is a suction effect through the spaces that communicate said channel with the adjacent cells and through them. In other words, currents are generated in the tank which go from the adjacent cells to the longitudinal channels and between the adjacent cells with one another, so that the solution is oxygenated and then displaced through the roots of the plants.

During the second part of the path, the first propelled current that circulates through the straight channels loses force due to friction and a dispersion effect occurs of said volume of water in movement towards the sides passing through the adjacent walls in direction against the aforementioned absorption, i.e. currents are produced that go from the channels to the adjacent cells.

The alternate disposal of longitudinal channels and adjacent cells, and the emission of volume through the longitudinal channels, generates currents in the nutrient solution of propulsion, absorption and dispersion, with these varying depending on the arrangement of cells, channels and emitters. Said currents generated in each emitter interact with the currents generated by the closest emitters, producing a general and circular movement in the nutrient solution contained in the growing tank.

The irrigation applied by the method described in the invention may be applied continuously or in cycles of time.

The volume of nutrient solution which is emitted by the irrigation emitters is drained in various forms, for example by means of overflows situated in the growing tank. The best possible option consists of draining the excess nutrient solution from the growing tank by means of overflows, to control the level of solution contained in the growing tank, said drainage may be performed by gravity and without the need for energy consumption. In other cases, the nutrient solution contained in the growing tank may be pumped or suctioned in real time to the irrigation head and recirculated back to the irrigation emitters, in this way the nutrient solution of the growing tank is directly recirculated.

### DESCRIPTION OF THE FIGURES

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:
Figure 1: shows a general diagram of the two nutrient solution recirculation possibilities (figure 1A and 1B) of the irrigation system of the present invention.
Figure 2: shows a plan view of the grid of the irrigation system of the present invention.
Figure 3: shows a cross-section of the channels of the system of the present invention.
Figure 4: shows a perspective view of the cells and their intercommunications.
Figure 5: shows a view of a longitudinal section of a channel.
Figure 6: shows the disposal of the plants on a support of those the system of the present invention may comprise.
Figure 7: represents a detail of the irrigation emitters emitting stream of nutrient solution against the surface of the nutrient solution contained in the growing tank.
Figure 8: shows a view of the system operation where the arrows indicate the direction and sense of the currents generated.

### DETAILED DESCRIPTION OF THE INVENTION

The irrigation system and method of the present invention is described in detail below, based on the figures presented.

The system of the present invention is designed for hydroponic crops grown in a growing tank (1) where a nutrient solution or hydroponic solution for the plant growth is contained.

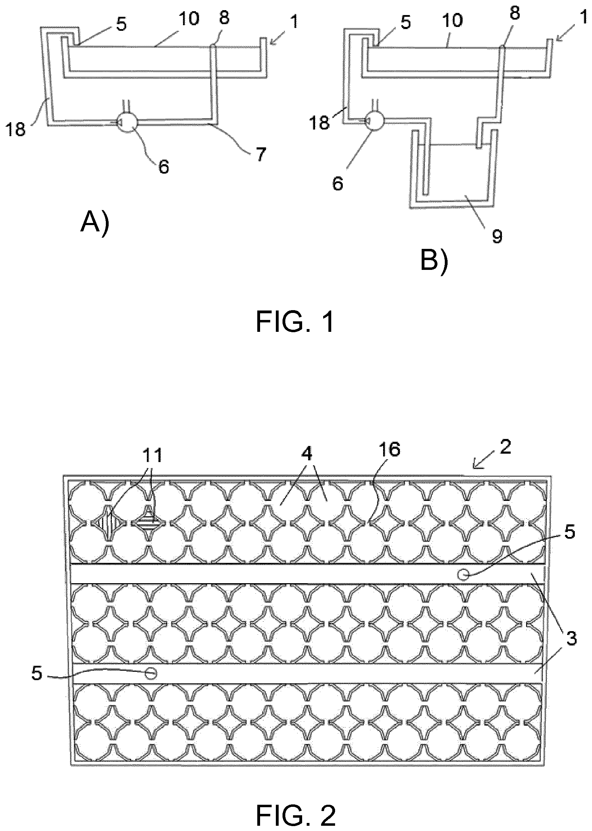

As observed in figures 1 and 2, a preferred embodiment of the system of the present invention comprises:
- a grid (2) partially submerged in the nutrient solution of the growing tank (1), said grid (2) being formed by straight channels (3) separated from each other by adjacent cells (4) which are connected to said channels (3) and/or to each other. The cells (4) are designed to receive therein one or more plants.
- at least one irrigation emitter (5) disposed in a channel (3) of the grid, configured to emit water or nutrient solution into the nutrient solution contained in the tank (1) or on the surface (10) of same.
- an irrigation head comprising at least one pump (6), said head being connected by one part to the growing tank through drainage pipes (7) (figure 1A) or to a nutrient solution storage tank (9) (Figure 1B) and, by another part, to the irrigation emitters (5).

As observed in figure 1, the system includes overflows (8) whereby the excess nutrient solution exits or overflows the growing tank which is carried to the irrigation head or to the storage tank (9) through the drainage pipes (7), thus keeping a same volume of nutrient solution in the growing tank (1). The storage tank (9) allows storing the drained nutrient solution before again being recirculated to the growing tank (1).

Figure 2 shows in detail the grid (2) formed by a series of straight channels (3), said channels (3) being separated from one another by an array of cells (4), it being possible that said cells (4) communicate with the straight channels (3) and/or are interconnected with one another.

Said grid (2) may be joined to the growing tank (1) secured to the bottom of the growing tank (1) or to the sides thereof. Likewise, the grid (2) may be adhered to the bottom of the growing tank (1) or simply resting on it. In contrast, the grid (2) may be executed in mobile fashion, placing it floating, always keeping one part of the grid submerged and another part emerging from the surface (10) of the nutrient solution contained in the growing tank (1). In this case, the system would include floating bodies (11) which have the function of regulating the floatability of the grid (2). These bodies (11) would be situated in the spaces formed between the cells (4) and between cells (4) and longitudinal channels (3) (see figure 2).

Preferably, the floating bodies (11) are manufactured with polystyrene; they may also be manufactured in plastics such as polyethylene, polypropylene, PVC, and can be filled with polystyrene, air or polyurethane foam among others. Said floatability is calculated depending on the weight of the grid (2) and on the weight of the pipes and crops that said grid (2) had to support. The grid (2) may also form part of the structures designed to control the floatability and can be manufactured in the same materials as the floating bodies (11).

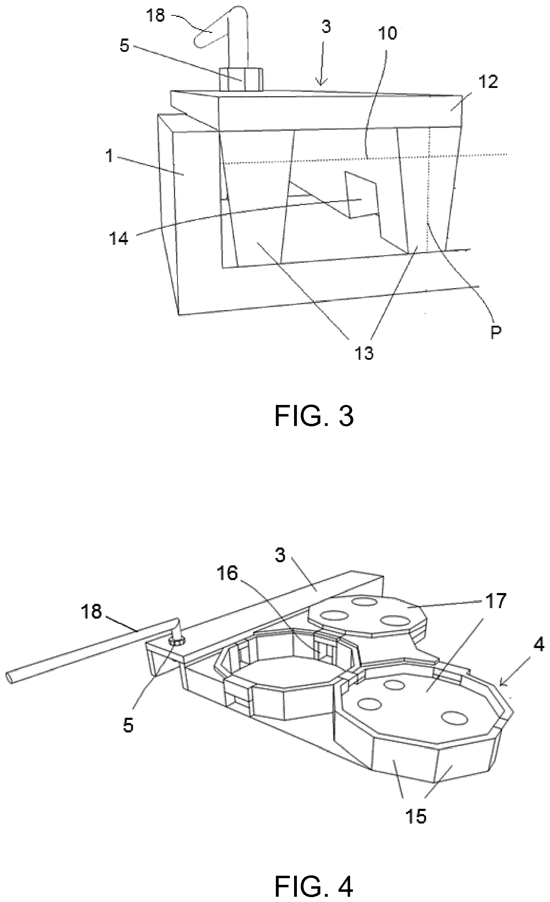

As shown in figure 3, each longitudinal channel (3) has a cross-section in the shape of an inverted U, being formed by an upper plane (12) parallel to the surface (10) of the nutrient solution contained in the growing tank (1) and by two sides or lateral walls (13) perpendicular to the surface (10) of the nutrient solution or containing at least one longitudinal plane (P) perpendicular to said surface (10), thus forming a structure of channel (3) with a cross-section in the shape of an inverted U. Preferably, the shortest distance between the lateral walls (13) of the channels is between 10mm and 200mm, thus optimizing the space designed for the plant growth.

The cross-section of the lateral walls (13) may be rectangular or trapezoidal (as is the case represented in figure 3), but they will also include at least one longitudinal plane (P) perpendicular to the surface (10) of the nutrient solution contained in the tank (1).

The lateral walls (13) of the channels (3) comprise openings (14) which communicate said channel with the adjacent cells (4), as observed, for example, in figures 2, 3 and 5.

For its part, as shown in figure 4, the adjacent cells (4) are formed by lateral walls (15) which form their perimeter and structure. Said lateral walls (15) have openings (16) wherethrough the cells (4) communicate with the channels (3) and/or each other.

As with the lateral walls (13) of the channels (3), the cross-section of the lateral walls (15) of the cells (4) may be rectangular or trapezoidal but it will include a longitudinal plane perpendicular to the surface (10) of the nutrient solution contained in the tank (1).

The channels (3) and cells (4) may be manufactured with any rigid or semi-flexible plastic, for example, polypropylene, PVC or polyethylene as previously described, with materials that float. Likewise, they may be manufactured by means of moulds or through the joining of different parts by gluing or articulation.

Each channel (3) may receive one or more irrigation emitters (5) along its path. They may also be channels that do not include any irrigation emitter. The cells (4) are designed to receive therein one or more plants. The irrigation emitters (5) may be installed in all or several channels (3) of the grid (2).

As shown in figure 4, in order to facilitate the accommodation of the plants, the cells (4) may have a support (17), which may be fixed or detachable. Said support (17), which is positioned parallel to the surface (10) of the nutrient solution contained in the growing tank (1), may be a floating plane contained in the space delimited by the sides (15) of the cells (4) or may rest on the grid (2), either on the lateral walls (15) of the cells, in the channels (3) and/or on the floating bodies (11). The best results are obtained resting the support (17) on the grid instead of floating on the nutrient solution, thus leaving an air space between said support (17) and the surface (10) of the solution contained in the growing tank (1). The support (17) also has the secondary function of isolating the nutrient solution contained in the growing tank (1) from the surrounding atmosphere, and preventing light from entering.

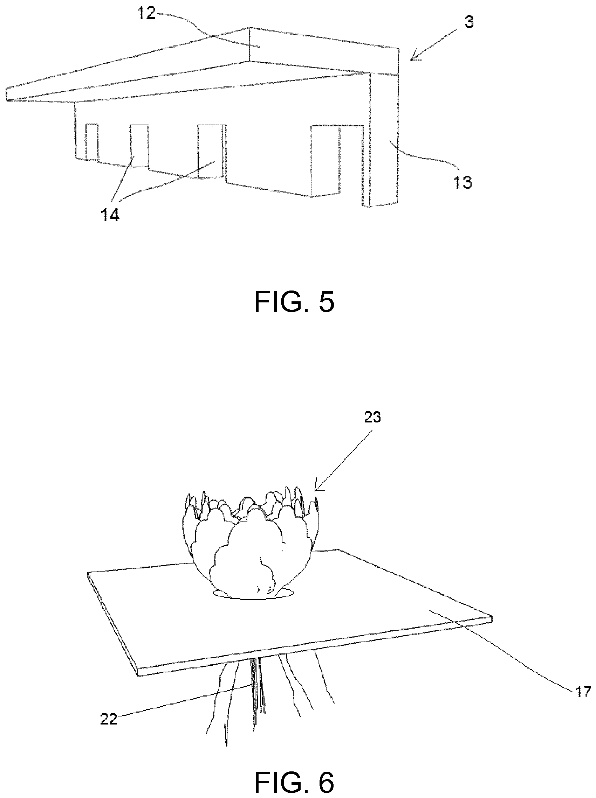

Figure 6 shows the arrangement of a plant (23) on a support (17).

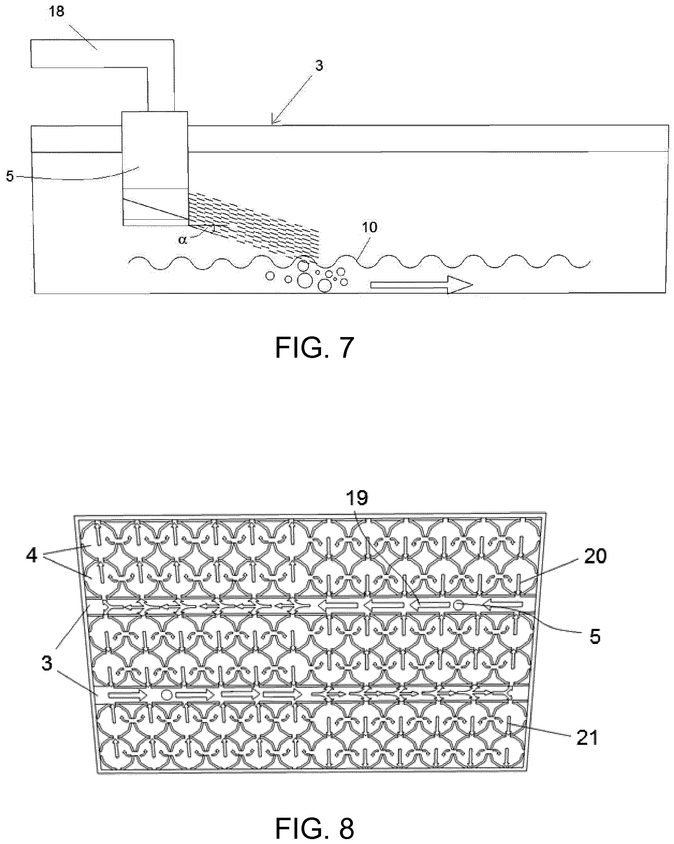

The irrigation emitters (5) emit a given stream at a given pressure, and the flowrate may vary in accordance with the working pressure of the system. Preferably, the working pressure is situated between 0.15 Kg/cm2 and 6 Kg/ cm2 of dynamic pressure in the irrigation emitter (5), emitting a flowrate between 15 litres/hour and 600 litres/hour. Likewise, as shown in figure 7, said irrigation emitters (5) emit said volume with an angle of incidence (α) which varies between 0° and 80°, with 0° being parallel to the line formed by the surface (10) of the nutrient solution contained in the growing tank (1). If the angle is 0°, the irrigation emitters (5), whereby the nutrient solution exits, must be immersed in the nutrient solution contained in the tank. Thanks to the operation of said irrigation emitters (5) it is possible to easily control the volume emitted throughout the installation and guarantee a completely homogeneous irrigation. The pressure and volume are controlled by the pump (6) which forms part of the irrigation head. The irrigation head may also include programmer, filters for the nutrient solution before it is taken again to the growing tank (1), disinfection systems and other additional elements or equipment for treatment of the nutrient solution.

The irrigation emitters (5) may be installed in all or in several longitudinal channels (5) of the system. For the aforementioned preferred ranges of volume and dynamic pressure in the irrigation emitter (5), preferably the irrigation emitters will be separated within a same channel by between 25 cm and 450 cm (if more than one is installed in the same channel) and preferably they are laterally separated (distance between emitters situated in adjacent channels) by between 10 cm and 600 cm.

The emitters may be disposed in different channels forming triangles therebetween in quincunx, forming squares, opposite one another at regular spaces in length and width or rectangular arrangement.

To carry out the hydroponic irrigation method by means of the system described, in first place the irrigation emitters (5) are fed by pipes or channels (18) located in the sides and/or fronts of the growing tank (1).

A given flowrate at a given pressure is calculated to arrive to be projected by the irrigation emitters (5) into the nutrient solution or against the surface (10) of the liquid (nutrient solution) contained in the growing tank (1) with an inclination between 0° and 80°, with 0° being parallel to the line formed by the surface of the liquid (10) contained in the growing tank. Said impact generates a high level of oxygenation considerably improving plant health and the quality of the liquid contained in the growing tank.

As previously mentioned, the irrigation emitters (5) preferably emit flowrate between 15 litres/hour and 600 litres/hour at a working pressure between 0.15 Kg/cm² and 6 Kg/cm² during the irrigation method.

As shown in figure 8, the volume emitted at the given pressure, once it impacts the nutrient solution contained in the growing tank (1), generates a main current (19) which runs in the direction of the channels (3). Said main current (19) generates, in turn, secondary currents (20 and 21) in this case being exposed to a secondary absorption current (20) which circulates through the openings (14) which are disposed between the straight channel (3) and the adjacent cells (4). This secondary absorption current (23) also generates additional dispersion currents through the openings (16) which intercommunicate the cells (6) with one another. The main current (19) loses force as it runs through the longitudinal channel (3), after travelling a distance given by the pressure and flowrate to which the installation is configured, the main current (19) generates secondary dispersion currents (21) which move laterally, first through the openings (14, 16) which communicate the longitudinal channel (3) with the cells (4) adjacent thereto and second through the openings which intercommunicate the cells (4) with one another. These currents, both main (19) and secondary of absorption (20) and secondary of dispersion (21), are rich in oxygen, rich in nutrients and possibly have a different temperature to that of the liquid contained in the growing tank contributing to the control of the temperature in the growing tank (1). The secondary currents (20) and (21), pass through the roots (22) of the plants (23) exponentially multiplying the volume of water or nutrient solution which passes therethrough, increasing the quantity and availability of dissolved oxygen, CO₂ and nutrients which reaches each root.

In this way, the currents generated through each irrigation emitter (5) interact with the currents generated by the other irrigation emitters (5) disposed in the channels (3), developing currents that interact with one another achieving that the entire volume of liquid contained in the growing tank (1) enters into movement passing through one or more points of impact of the irrigation emitters during each irrigation cycle.

To originate said general movement, the irrigation cycles will have a minimum duration such that it allows the currents to interact with one another.

The nutrient solution contained in the tank is recirculated. It may be extracted from the growing tank (1) through a pumping apparatus (6) of the irrigation head and again recirculated to the growing tank (1) (see figure 1A) or may be taken to a storage tank or repository (9) situated between the growing tank (1) and the irrigation head (see figure 1B). The nutrient solution reaches said storage tank (9) by gravity or by means of a pump (6) or pumping system which is part or all of the irrigation head.

## Claims

1. Irrigation system for hydroponic crops, of the type used in growing tanks (1) containing a nutrient solution or hydroponic solution, **characterized in that** it comprises:
- a grid (2) partially submerged in the nutrient solution of the growing tank (1), said grid (2) being formed by longitudinal straight channels (3) wherethrough a nutrient solution circulates, said straight channels (3) being separated from each other by adjacent cells (4) where the plants to be grown are arranged, said cells (4) being connected to said longitudinal straight channels (3) and/or to each other; and where the straight channels (3) have a cross-section in the shape of an inverted U, so that its lower face is completely open,
- at least one irrigation emitter (5) disposed in a straight channel (3) of the grid, said emitter (5) being configured to emit a volume of water or nutrient solution into the nutrient solution contained in the tank (1) or on the surface (10) of same.

2. Irrigation system for hydroponic crops, according to claim 1, wherein it includes an irrigation head comprising at least one pump (6), said head being connected by one part to the growing tank (1) or to a storage tank (9) of nutrient solution through drainage pipes (7) and by another part, to the irrigation emitters (5).

3. Irrigation system for hydroponic crops, according to claim 1, **characterized in that** the straight channels (3) are formed by:
- sides or lateral walls (13) perpendicular to the surface (10) of the nutrient solution (3) wherein they are partially submerged or at least comprise a longitudinal plane perpendicular to said surface (10), said lateral planes (13) being equipped with one or more openings (14) wherethrough they are connected to the adjacent cells (4) and
- by an upper central element (12) which gives support to the irrigation emitters (5), said upper element (12) being parallel to the surface (10) of the nutrient solution contained in the growing tank (1), so that the lateral walls (13) together with the upper element (12) form a channel (3) the cross-section whereof has the shape of an inverted U.

4. Irrigation system for hydroponic crops, according to claim 1, wherein the adjacent cells (4) are formed by lateral walls or sides (15) joined together forming the structure and perimeter thereof, delimiting a space configured to locate one or more plants to grow and where said sides (15) comprise openings (16) wherethrough the cells are connected to the channels (3) and/or to each other.

5. Irrigation system for hydroponic crops, according to claim 4, wherein the cells (4) comprise a support (17) equipped with one or several orifices to place the plants and where the support (17) may be a floating structure situated in the space delimited by the sides (15) of the cells (4) or may be a structure resting on the grid (2).

6. Irrigation system for hydroponic crops, according to claim 1, wherein the grid (2) is secured to the sides and/or to the bottom of the growing tank (1) or may form part of the structure of the growing tank (1).

7. Irrigation system for hydroponic crops, according to claim 1, wherein the grid (4) is floating, comprising floating bodies (11) situated in the spaces between cells (4) and in the spaces between cells (4) and channels (3).

8. Irrigation system for hydroponic crops, according to claim 1, wherein the irrigation emitters (5) are configured to emit a volume of water or nutrient solution with an angle of incidence against the nutrient solution contained in the tank (1) between 0° and 80°, with 0° being parallel to the surface (10) of the nutrient solution and with the condition that when the angle is 0° the irrigation emitter (5) is immersed in the nutrient solution contained in the tank (1).

9. Irrigation system for hydroponic crops, according to claim 1, wherein the irrigation emitters (5) are configured to emit a flowrate of water or nutrient solution between 15 litres/hour and 600 litres/hour at a dynamic pressure in the irrigation emitter (5) of between 0.15 Kg/cm2 and 6 Kg/ cm2.

10. Irrigation system for hydroponic crops, according to claims 3 and 4, wherein the cross-section of the lateral walls both of the cells and of the channels may be rectangular or trapezoidal.

11. Irrigation system for hydroponic crops, according to claim 1, wherein it comprises several irrigation emitters (5) forming triangles therebetween by way of quincunx, squares or rectangles.

12. Irrigation method for hydroponic crops, **characterized in that** it uses the system described in any of the preceding claims where the irrigation emitters (5) emit a stream of water or nutrient solution against the nutrient solution contained in the tank (1), generating a main current (19) along the longitudinal straight channels (3) and secondary currents (20 and 21) between the channels (3) and the cells (4).

13. Irrigation method for hydroponic crops, according to claim 12, wherein the irrigation emitters (5) emit a stream of water or nutrient solution with an inclination between 0° and 80°, with 0° being parallel to the line formed by the surface (10) of the nutrient solution contained in the growing tank.

14. Irrigation method for hydroponic crops, according to claim 12, wherein the irrigation emitters (5) emit a flowrate of between 15 litres/hour and 600 litres/hour and between 0.15 Kg/cm2 and 6 Kg/ cm2 of dynamic pressure in the emitter (5).

15. Irrigation method for hydroponic crops, according to claim 12, wherein the irrigation emitters (5) receive nutrient solution from a storage tank (9) or from the growing tank (1) through channels.
